(19) **Europäisches Patentamt / European Patent Office / Office européen des brevets**

(11) **EP 2 832 695 A1**

(12) **EUROPEAN PATENT APPLICATION**
published in accordance with Art. 153(4) EPC

(43) Date of publication:
**04.02.2015 Bulletin 2015/06**

(21) Application number: **13767674.8**

(22) Date of filing: **25.03.2013**

(51) Int Cl.:
*C01F 7/00* (2006.01)   *C08K 3/26* (2006.01)
*C08K 9/04* (2006.01)   *C08L 21/00* (2006.01)
*C08L 23/02* (2006.01)   *C08L 27/06* (2006.01)
*C08L 101/00* (2006.01)

(86) International application number:
**PCT/JP2013/059789**

(87) International publication number:
**WO 2013/147284 (03.10.2013 Gazette 2013/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **26.03.2012   JP 2012069194**

(71) Applicant: **Kyowa Chemical Industry Co., Ltd Takamatsu-shi, Kagawa 761-0113 (JP)**

(72) Inventors:
• **KUROGI, Yusuke**
**Sakaide-shi**
**Kagawa 762-0012 (JP)**
• **NAKAMURA, Tsukasa**
**Sakaide-shi**
**Kagawa 762-0012 (JP)**
• **MIYATA, Shigeo**
**Kitakyushu-shi**
**Fukuoka 807-1123 (JP)**

(74) Representative: **Raynor, Stuart Andrew**
**J A Kemp**
**14 South Square**
**Gray's Inn**
**London WC1R 5JJ (GB)**

(54) **FINE HYDROTALCITE PARTICLES**

(57)   Hydrotalcite particles having an extremely small average secondary particle diameter and a production process therefor. A resin composition comprising hydrotalcite fine particles and having excellent transparency and a molded article thereof.

The hydrotalcite fine particles have an average secondary particle diameter measured by a dynamic light scattering method of 5 to 100 nm.

Fig. 1

EP 2 832 695 A1

**Description**

TECHNICAL FIELD

The present invention relates to hydrotalcite fine particles and a production process therefor.

BACKGROUND ART

Hydrotalcite particles have been known for a long time and have excellent acid reactivity and anion exchangeability. Making use of these properties, hydrotalcite particles are used in a wide variety of fields such as medical antacids, adsorbents, neutralizers for the catalyst residue of a polyolefin-based resin and stabilizers for chlorine-based resins.
Along with an increasing number of cases where nano-particles provide new applications, the development of hydrotalcite particles of a nano-order level is becoming necessary. The fine particles of a nano-order level are nonprecipitating and highly transparent and therefore useful in such fields as cosmetics, medication and coating materials.

DISCLOSURE OF THE INVENTION

It is an object of the present invention to provide nano-order hydrotalcite particles having an extremely small secondary particle diameter and a production process therefor. It is another object of the present invention to provide a resin composition comprising the hydrotalcite particles. It is still another object of the present invention to provide a nonprecipitating and highly transparent dispersion containing the hydrotalcite particles. This dispersion may be used for cosmetics, medication and coating materials.
The inventors of the present invention conducted intensive studies on a process for producing hydrotalcite particles having an extremely small secondary particle diameter. As a result, they found that hydrotalcite particles having an extremely small average secondary particle diameter are obtained by means of a wet fine grinding mill (bead mill) using very small beads having a diameter of not more than 300 $\mu$m. The present invention was accomplished based on this finding.
That is, the present invention is hydrotalcite particles having an average secondary particle diameter measured by a dynamic light scattering method of 5 to 100 nm.
The present invention is also a resin composition comprising 100 parts by weight of a resin and 0.001 to 300 parts by weight of hydrotalcite particles having an average secondary particle diameter measured by the dynamic light scattering method of 5 to 100 nm.
The present invention is further a dispersion containing 100 parts by weight of water and 0.1 to 100 parts by weight of hydrotalcite particles having an average secondary particle diameter of 5 to 100 nm.
The present invention is still further a process for producing hydrotalcite particles having an average secondary particle diameter measured by the dynamic light scattering method of 5 to 100 nm, comprising wet milling slurry of hydrotalcite particles having an average secondary particle diameter of 0.1 to 10 $\mu$m by using beads having a diameter of 15 to 300 $\mu$m.

BRIEF DESCRIPTION OF THE DRAWINGS

   Fig. 1 shows a SEM photomicrograph of the present invention (Example 1);
   Fig. 2 shows the transmittances of Example 2 and Comparative Example 2; and

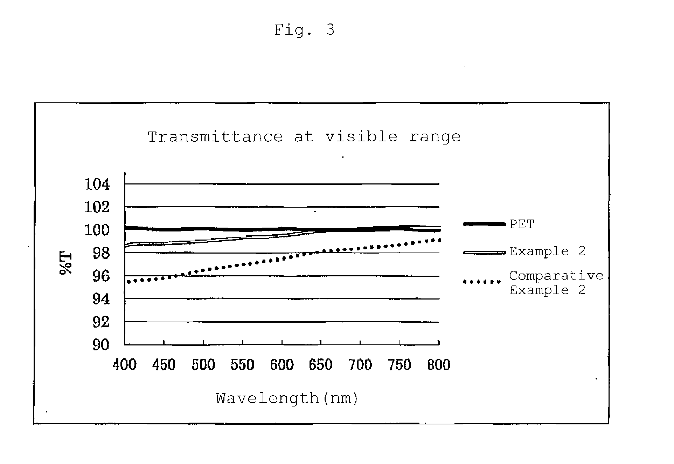

   Fig. 3 shows the transmittances at a visible range of Example 2 and Comparative Example 2.

BEST MODE FOR CARRYING OUT THE INVENTION

<hydrotalcite particles>

The hydrotalcite particles of the present invention have an average secondary particle diameter measured by the dynamic light scattering method of 5 to 100 nm, preferably 5 to 50 nm, more preferably 5 to 20 nm.
Although the composition of the hydrotalcite particles of the present invention is not particularly limited, particles having composition represented by the following formula (1) are preferred.

$$[M_1^{2+}]y_1(M_2^{2+})_{y2}]_{1-X}M_X^{3+}(OH)_2 A^{n-}_{x/n} \cdot mH_2O \qquad (1)$$

In the above formula, $M_1^{2+}$ is at least one divalent metal selected from divalent metals such as Mg, Zn, Ca, Sr, Cu, Fe, Mn, Co, Ni, Sn, Pb, Cd and Ba.

$M^{3+}$ is at least one trivalent metal such as Al or Fe.

$A^{n-}$ is an n-valent anion. Examples of the anion include chlorine ion, carbonate ion and organic acid ion.

X, $y_1$, $y_2$ and m are positive numbers represented by the following expressions.

$$0 < x \leqq 0.5$$

$$0.5 \leqq y1 + y2 < 1$$

$$0 \leqq m < 2$$

In the above formula (1), preferably, $M_1^{2+}$ is Mg and/or Zn, and $M^{3+}$ is Al.

Since the hydrotalcite particles of the present invention have a small secondary particle diameter, they can be used as a suspension or sol type medical antacid which is nonprecipitating and highly transparent, coating material, cosmetic, adsorbent, neutralizer for the catalyst residue of a polyolefin-based resin or stabilizer for chlorine-based resins.

(surface treatment)

Although the hydrotalcite particles used in the present invention can be mixed with a synthetic resin as they are, the particles may be treated with a surface treating agent before use.

The surface treating agent is preferably at least one selected from the group consisting of higher fatty acids, sulfuric acid esters of a higher alcohol, titanate coupling agents, silane coupling agents, aluminate coupling agents, esters of a polyhydric alcohol and a fatty acid, phosphoric acid esters and anionic surfactants.

The higher fatty acids include higher fatty acids having 10 or more carbon atoms such as stearic acid, erucic acid, palmitic acid, lauric acid and behenic acid. Alkali metal salts of these higher fatty acids may also be used.

The sulfuric acid esters of a higher alcohol include steary alcohol sulfuric acid esters and oleyl alcohol sulfuric acid esters.

The titanate coupling agents include isopropyl triisostearoyl titanate, isopropyl tris(dioctylpyrophosphate)titanate, isopropyl tri(N-aminoethyl-aminoethyl)titanate and isopropyl tridecylbenzene sulfonyl titanate.

The silane coupling agents include vinyl ethoxysilane, vinyl-tris(2-methoxy-ethoxy)silane, gamma-methacryloxypropyltrimethoxysilane, gamma-aminopropyltrimethoxysilane, beta-(3,4-epoxycyclohexyl)ethyltrimethoxysilane, gamma-glycidoxypropyltrimethoxysilane and gamma-mercaptopropyltrimethoxysilane.

The aluminate coupling agents include acetoalkoxyaluminum diisopropylate.

The esters of a polyhydric alcohol and a fatty acid include glycerin monostearate and glycerin monooleate.

The phosphoric acid esters include monoesters and diesters of orthophosphoric acid and oleyl alcohol and mixtures thereof, and monoesters and diesters of orthophosphoric acid and stearyl alcohol and mixtures thereof. Acid and alkali metal salts and amine salts of these esters may also be used.

The anionic surfactants include sulfuric acid ester salts of polyethylene glycol ether, amide-linked sulfuric acid ester salts, ester-linked sulfuric acid ester salts, ester-linked sulfonates, amide-linked sulfonic acid salts, ether-linked sulfonic acid salts, ether-linked alkyl aryl sulfonic acid salts, ester-linked alkyl aryl sulfonic acid salts and amide-linked alkyl aryl sulfonic acid salts.

To coat the surfaces of the hydrotalcite fine particles with the above surface treating agent, a wet or dry process known per se may be employed. For example, in the wet process, the surface treating agent in a liquid or emulsion form is added to hydrotalcite fine particle slurry and mechanically fully mixed with the particles at a temperature up to about 100°C. In the dry process, the surface treating agent in a liquid, emulsion or solid form is added to the hydrotalcite fine particles while they are fully stirred by means of a mixer such as a Henschel mixer to be fully mixed with the particles under heating or non-heating.

The amount of the surface treating agent to be added may be suitably selected but preferably not more than 10 wt% based on the weight of the hydrotalcite particles.

Rinsing, dehydration, granulation, drying, milling and classification are suitably selected as required and carried out on the surface treated hydrotalcite particles to produce a final product.

<resin composition>

The resin composition of the present invention comprises 100 parts by weight of a resin and 0.001 to 100 parts by weight, preferably 0.01 to 20 parts by weight, more preferably 0.1 to 10 parts by weight of hydrotalcite particles.

The resin is preferably a thermoplastic resin. Examples of the thermoplastic resin include olefin (α-olefin) polymers and copolymers having 2 to 8 carbon atoms such as polyethylene, polypropylene, ethylene-propylene copolymer, polybutene and poly(4-methylpentene-1), copolymers of these olefins having 2 to 8 carbon atoms and dienes, ethylene-acrylate copolymer, polystyrene, ABS resin, AAS resin, AS resin, MBS resin, ethylene-vinyl chloride copolymer resin, ethylene-vinyl acetate copolymer resin, ethylene-vinyl chloride-vinyl acetate graft polymer resin, vinylidene chloride, polyvinyl chloride, chlorinated polyethylene, chlorinated polypropylene, vinyl chloride-propylene copolymer, vinyl acetate resin, phenoxy resin, polyacetal, polyamide, polyimide, polycarbonate, polysulfone, polyphenylene oxide, polyphenylene sulfide, polyethylene terephthalate, polybutylene terephthalate and methacrylic resin.

As polyolefins, polypropylene-based resins such as polypropylene homopolymer and ethylene-propylene copolymer, polyethylene-based resins such as high-density polyethylene, low-density polyethylene, linear low-density polyethylene ultralow-density polyethylene, EVA (ethylene vinyl acetate resin), EEA (ethylene ethyl acrylate resin), EMA (ethylene methyl acrylate copolymer resin), EAA (ethylene acrylic acid copolymer resin) and super high molecular weight polyethylene, and olefin (α-ethylene) polymers and copolymers having 2 to 6 carbon atoms such as polybutene and poly(4-methylpentene-1) are enumerated. Out of these, polyethylene, polypropylene, polybutene, poly(4-methylpentene-1) and copolymers thereof are particularly suitable for use in the composition of the present invention. Although these polyolefins contain halogen derived from a polymerization catalyst, the composition of the present invention is extremely effective for thermal deterioration caused by the halogen.

Further, thermosetting resins such as epoxy resin, phenolic resin, melamine resin, unsaturated polyester resin, alkyd resin and urea resin may also be used.

Synthetic rubbers such as halogen-containing rubbers including EPDM, butyl rubber, isoprene rubber, SBR, NBR, chlorosulfonated polyethylene, fluorine rubber, brominated butyl rubber and epichlorohydrin rubber may be used as well.

The resin is preferably a polyolefin, polyvinyl chloride, polyvinyl alcohol (PVA) or rubber.

To prepare the resin composition, means for mixing the hydrotalcite fine particles with the resin is not particularly limited. For instance, the same means as commonly used known means for mixing a stabilizer and a filler with these resins may be used to mix the hydrotalcite fine particles with another resin blending material or with a synthetic resin separately as uniformly as possible. For example, known mixing means such as a ribbon blender, high-speed mixer, kneader, pelletizer or extruder is used to mix the hydrotalcite particles, or a suspension of a heat deterioration agent comprising the hydrotalcite fine particles as an effective component is added to and mixed with slurry after polymerization under agitation and dried.

The resin composition of the present invention may be mixed with other commonly used additives in addition to the above components. The additives include an antioxidant, ultraviolet inhibitor, antistatic agent, pigment, foaming agent, plasticizer, filler, reinforcing agent, organic halogen flame retardant, crosslinking agent, optical stabilizer, ultraviolet absorbent, lubricant, other inorganic and organic heat stabilizers and water.

<molded article>

The present invention includes a molded article obtained by molding the above resin composition.

<dispersion>

The dispersion of the present invention contains 100 parts by weight of water and 0.01 to 100 parts by weight of hydrotalcite particles having an average secondary particle diameter measured by a dynamic light scattering method of 5 to 100 nm. The content of the hydrotalcite particles is preferably 0.1 to 50 parts by weight, more preferably 1 to 20 parts by weight based on 100 parts by weight of water. The dispersion of the present invention is nonprecipitating and excellent in transparency and may be used for medication (such as antacids and iron preparations), cosmetics (such as light scattering agents and UV absorbents) and coating materials (anticorrosive).

The dispersion of the present invention preferably contains a dispersant. Sodium hexametaphosphate is used as the dispersant. The content of the dispersant is preferably 3 to 30 parts by weight, more preferably 5 to 20 parts by weight, much more preferably 5 to 10 parts by weight based on 100 parts by weight of the hydrotalcite particles. When the dispersant is contained in the dispersion, the agglomeration of the hydrotalcite particles is suppressed and the average secondary particle diameter of the hydrotalcite particles can be kept small for a long time.

The hydrotalcite particles of the present invention can be produced by wet milling the raw material slurry of hydrotalcite particles having an average secondary particle diameter of 0.2 to 10 $\mu$m with beads having an average diameter of 15 to 300 $\mu$m.

The raw material slurry contains hydrotalcite and a medium. The medium is water or an organic solvent. Examples of the organic solvent include aromatic hydrocarbons such as toluene and xylene, aliphatic hydrocarbons such as hexane, cyclohexane and heptane, esters such as ethyl acetate and n-butyl acetate, alcohols such as ethylene glycol, butyl cellosolve, isopropanol, n-butanol, ethanol and methanol, ketones such as acetone, methyl ethyl ketone, methyl isobutyl ketone and cyclohexanone, ethers such as tetrahydrofuran and dioxane, amides such as dimethyl acetamide and dimethyl formamide, halogen compounds such as chloroform, methylene chloride and carbon tetrachloride, dimethyl sulfoxide, nitrobenzene and mixtures of two or more thereof. A grinding aid (dispersant) such as a polyol may be further used as required.

The average secondary particles diameter of hydrotalcite contained in the raw material slurry is 0.1 to 10 $\mu$m, preferably 0. 2 to 5 $\mu$m. The average secondary particle diameter is measured by a laser diffraction scattering method. The content of the hydrotalcite particles in the slurry is preferably 0.1 to 50 parts by weight, more preferably 1 to 20 parts by weight based on 100 parts by weight of the medium.

The average diameter of the beads used for wet bead milling is 15 to 300 $\mu$m, preferably 15 to 100 $\mu$m, more preferably 30 to 50 $\mu$m. The material of the beads is glass, alumina, zirconia, zircon, steel or titania.

As the apparatus used for wet bead milling, a wet type stirring ball mill may be used to mill the hydrotalcite particles contained in the slurry by stirring and mixing the beads and the slurry by turning a rotor. The wet type stirring ball mill has a rotor which is fixed to a shaft in a casing and stirs the beads and the slurry filled in the casing. Preferably, it also has a separator which is fixed to the shaft in the casing to be turned together with the shaft so as to separate the slurry having low specific gravity from the beads having high specific gravity by the function of centrifugal force. The beads are generally filled in the casing to 60 to 80 % (bulk volume) of the effective volume of the casing for operation. The revolution of the rotor is preferably 4,000 to 5,000 rpm.

As the wet type stirring ball mill, the Ultra Apex Mill UAM-015 1170 of Kotobuki Industries Co., Ltd. is preferred. The Ultra Apex Mill enables the use of micro-beads having a diameter of 0.05 mm or less due to Ultra Centri-separator so that milling in a nano-region is possible. Optimum dispersion force can be applied to the hydrotalcite particles by rotor pin system bead stirring so that re-agglomeration by particulate fracture in the nano-region is prevented and high dispersion and precise dispersion are possible.

EXAMPLES

The following examples are provided to further illustrate the present invention. PHR is a value expressed in parts by weight of each additive based on 100 parts by weight of the resin.

(a) Average secondary particle diameter, (b) SEM photomicrograph and (c) transmittance were measured by the following methods in the examples.

(a) Average secondary particle diameter

This was measured by using the ELSZ-2 (dynamic light scattering method: dynamic/electrophoresis light scattering method) of Otsuka Electronics Co., Ltd. Hydrotalcite slurry was measured after 5 minutes of an ultrasonic treatment.

(b) SEM photomicrograph

The S-3000N of Hitachi High-Technologies Corporation was used. A specimen was prepared by dropping hydrotalcite slurry on a stage after 10 minutes of an ultrasonic treatment to be observed.

(c) Light transmittance

The U-4100 spectrophotometer of Hitachi High-Technologies Corporation was used. The transmittance of the specimen was measured based on 100 % of the transmittance of PET.

Example 1

(synthesis of hydrotalcite particles)

A mixed aqueous solution of magnesium chloride having a concentration of 1.03 mol/L and aluminum sulfate having a concentration of 0.239 mol/L {solution A}, a sodium carbonate aqueous solution having a concentration of 0.753 mol/L {solution B} and a sodium hydroxide aqueous solution having a concentration of 3.39 N {solution C} were prepared. Then, the solution A, the solution B and the solution C were injected into a reaction tank at a flow rate that ensured a solution A:solution B volume ratio of 4.5:1 by using a metering pump, and a reaction was carried out at 40°C while the pH value of the reaction solution was kept at 9.3 to 9.6 with the solution C so as to produce a precipitate. After filtration and washing, the reaction solution was re-emulsified with ion exchange water to obtain hydrotalcite slurry as a raw material. The content of hydrotalcite in the obtained hydrotalcite slurry was 5.6 wt%. The obtained hydrotalcite particles are represented by the following formula and had an average secondary particle diameter of 0.99 $\mu$m.
Composition: $Mg_{4.3}Al_2(OH)_{12.6}(CO_3)\cdot3.5H_2O$

(wet milling)

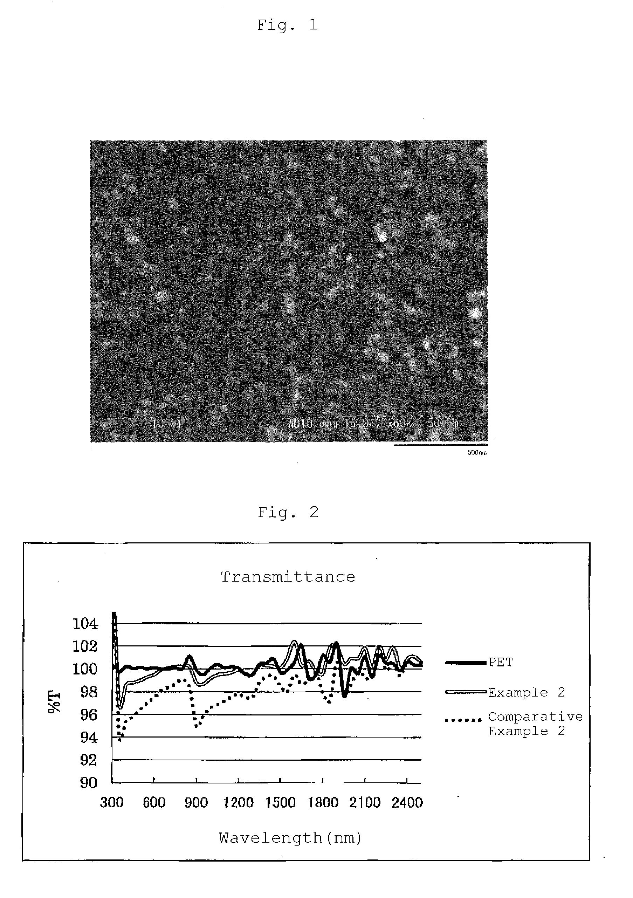

0.4 kg of ion exchange water was added to 1.0 kg of the obtained hydrotalcite slurry of Example 1 to dilute it so that the content of hydrotalcite in the hydrotalcite slurry became 4.0 wt%. The diluted hydrotalcite slurry was wet milled by adding zirconia beads having a bead diameter of 50 $\mu$m with the UAM-015 1170 to obtain particulate hydrotalcite slurry. The UAM-015 1170 was operated at a rotor revolution of 4,325 rpm and a slurry flow rate of 9.6 L/hr.
The measurement result of the average secondary particle diameter of the obtained hydrotalcite fine particles is shown in Table 1. A SEM photomicrograph of the particulate hydrotalcite is shown in Fig. 1. The average secondary particle diameter of the hydrotalcite particles after the particulate hydrotalcite slurry was ultrasonically dispersed and left for one day is shown in Table 1.

Example 2

0.16 g of sodium hexametaphosphate was added as a dispersant to 80 g of the particulate hydrotalcite slurry (hydrotalcite particle content of 3.2 g) of Example 1 to obtain slurry containing the dispersant. The content of hydrotalcite in the hydrotalcite slurry was 3.99 wt% as a calculated value but 3.82 wt% as an actual measurement value.
The measurement results of the average secondary particle diameter of the obtained hydrotalcite fine particles and the average secondary particle diameter one day after an ultrasonic treatment are shown in Table 1.

Table 1

|  | Average secondary particle diameter right after ultrasonic treatment | Average secondary particle diameter one day after ultrasonic treatment |
|---|---|---|
| Example 1 | 94nm | 186nm |
| Example 2 | 62nm | 68nm |

Comparative Example 1

Hydrotalcite having an average secondary particle diameter of 0.225 $\mu$m (DHT-4H of Kyowa Chemical Industry Co., Ltd.) was re-emulsified with ion exchange water to a concentration of 4.0 wt%. 0.16g of sodium hexametaphosphate was added as a dispersant to 80 g of the re-emulsified slurry (hydrotalcite particle content of 3.2 g) to obtain slurry containing the dispersant. The content of hydrotalcite in the hydrotalcite slurry was 3.78 wt% as an actual measurement value.

Example 3

(mixing ratio of resin)

The mixing ratio is as follows.

| Resin component | 100 parts by weight |
|---|---|
| Hydrotalcite particles obtained in Example 2 | 20 parts by weight |

(preparation of molded article)

The water-soluble gloss varnish of Kanpe Hapio Co., Ltd. (components: acrylic resin (refractive index of 1.49), organic solvent, water) was used. 13 g of the slurry obtained in Example 2 (0.497 g of hydrotalcite particles) was mixed with and ultrasonically dispersed in 5.44 g of the varnish (2.480 g of acrylic resin) for 3 minutes to obtain a coating material.

1 ml of the coating material was cast over a PET sheet having a thickness of 125 $\mu$m and naturally dried for one night to obtain a molded article. The thickness of the molded article was 80 to 120 $\mu$m. The transmittance of the obtained molded article was measured. The molded article had a transmittance of not less than 98%, was visually not clouded, clear and colorless and had no agglomerate. The molded article of the present invention exhibited high transparency.

Comparative Example 2

A molded article was manufactured by using the hydrotalcite particles of Comparative Example 1 under the same conditions as in Example 1. The transmittance of the manufactured specimen was measured. Although the transmittance was not less than 95 %, the molded article was clouded visually, and an agglomerate was observed.

Effect of the Invention

The hydrotalcite particles of the present invention have an extremely small average secondary particle diameter of 5 to 100 nm. When the particles are mixed into a resin, a molded article having high transparency is obtained. Even when the content of the particles is very low, their effect is obtained. Further, as the particles are small in size, they are excellent in workability at the time of molding and work efficiency due to the improvement of passing property through a filter. Further, they have an excellent effect as a medical antacid, adsorbent, neutralizer for the catalyst residue of a polyolefin-based resin or stabilizer for chlorine-based resins even when they are added in small amounts.

**Claims**

1. Hydrotalcite particles having an average secondary particle diameter measured by a dynamic light scattering method of 5 to 100 nm.

2. The hydrotalcite particles according to claim 1 whose surfaces are treated with at least one surface treating agent selected from the group consisting of higher fatty acids, titanate coupling agents, silane coupling agents, aluminate coupling agents, esters of a polyhydric alcohol and a fatty acid, phosphoric acid esters and anionic surfactants.

3. A resin composition comprising 100 parts by weight of a resin and 0.001 to 300 parts by weight of hydrotalcite particles having an average secondary particle diameter measured by a dynamic light scattering method of 5 to 100 nm.

4. The resin composition according to claim 3, wherein the resin is a polyolefin, polyvinyl chloride, polyvinyl alcohol (PVA) or rubber.

5. A molded article obtained by molding the resin composition of claim 3.

6. A dispersion containing 100 parts by weight of water and 0.1 to 100 parts by weight of hydrotalcite particles having an average secondary particle diameter measured by a dynamic light scattering method of 5 to 100 nm.

7. A process for producing hydrotalcite particles having an average secondary particle diameter measured by a dynamic light scattering method of 5 to 100 nm, comprising wet milling slurry of hydrotalcite particles having an average secondary particle diameter of 0.1 to 10 $\mu$m by using beads having a diameter of 15 to 300 $\mu$m.

Fig. 1

Fig. 2

Fig. 3

Transmittance at visible range

## INTERNATIONAL SEARCH REPORT

International application No.

PCT/JP2013/059789

**A. CLASSIFICATION OF SUBJECT MATTER**
$C01F7/00$(2006.01)i, $C08K3/26$(2006.01)i, $C08K9/04$(2006.01)i, $C08L21/00$ (2006.01)i, $C08L23/02$(2006.01)i, $C08L27/06$(2006.01)i, $C08L101/00$ (2006.01)i

According to International Patent Classification (IPC) or to both national classification and IPC

**B. FIELDS SEARCHED**

Minimum documentation searched (classification system followed by classification symbols)
C01F7/00, C08K3/26, C08K9/04, C08L21/00, C08L23/02, C08L27/06, C08L101/00

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)
JSTPlus/JMEDPlus/JST7580(JDreamIII)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | Madhurjya Modhur BORGOHAIN, et al., Studies on a nanocomposite solid polymer electrolyte with hydrotalcite as a filler, Solid State Ionics, 2010.07.26, Vol.181 No.21-22, Page 964-970 | 1<br>2-6<br>7 |
| Y<br>A | WO 2011/111487 A1 (Kyowa Chemical Industry Co., Ltd.), 15 September 2011 (15.09.2011), claims 1, 2, 8 to 16; paragraphs [0014], [0023], [0028], [0030], [0031]<br>& US 2013/0041081 A     & EP 2546296 A<br>& CA 2792054 A     & CN 102834443 A<br>& KR 10-2013-0008580 A   & MX 2012010321 A | 2-5<br>1,6,7 |

☒  Further documents are listed in the continuation of Box C.       ☐  See patent family annex.

| | |
|---|---|
| *  Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| | |
|---|---|
| Date of the actual completion of the international search<br>    30 May, 2013 (30.05.13) | Date of mailing of the international search report<br>    11 June, 2013 (11.06.13) |
| Name and mailing address of the ISA/<br>    Japanese Patent Office | Authorized officer |
| Facsimile No. | Telephone No. |

Form PCT/ISA/210 (second sheet) (July 2009)

10

**INTERNATIONAL SEARCH REPORT**

International application No.

PCT/JP2013/059789

C (Continuation).    DOCUMENTS CONSIDERED TO BE RELEVANT

| Category* | Citation of document, with indication, where appropriate, of the relevant passages | Relevant to claim No. |
|---|---|---|
| Y<br>A | JP 2011-57808 A  (Tayca Corp.),<br>24 March 2011 (24.03.2011),<br>claims 1, 2; paragraphs [0012], [0013]<br>(Family: none) | 6<br>1-5,7 |
| A | JP 2003-40616 A  (Mizusawa Industrial Chemicals, Ltd.),<br>13 February 2003 (13.02.2003),<br>entire text<br>& US 2004/0147660 A1    & WO 2003/010091 A1<br>& CA 2454790 A | 1-7 |
| A | JP 2001-323169 A  (Kyowa Chemical Industry Co., Ltd.),<br>20 November 2001 (20.11.2001),<br>entire text<br>& WO 2001/083620 A1    & CN 1383446 A | 1-7 |

Form PCT/ISA/210 (continuation of second sheet) (July 2009)

## INTERNATIONAL SEARCH REPORT

| International application No. |
| --- |
| PCT/JP2013/059789 |

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:

The invention of claim 1 does not have novelty and a special technical feature since the invention is disclosed in the following document 1, and consequently, the invention of claim 1 does not comply with the requirement of unity.

The inventions of claims indicated below are relevant to a main invention group.

Claims 1 and 2

Document 1: Madhurjya Modhur BORGOHAIN, et al., Studies on a nanocomposite solid polymer electrolyte with hydrotalcite as a filler, Solid State Ionics, 2010.07.26, Vol.181 No.21-22, Page 964-970

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.    Consequently, this international search report is restricted to the invention first mentioned in the claims; it is covered by claims Nos.:

**Remark on Protest**    ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)